# EUROPEAN PATENT SPECIFICATION

(11) **EP 2 266 711 B1**
(45) Date of publication and mention of the grant of the patent: **09.04.2014**
(21) Application number: 08831276.4
(22) Date of filing: 10.12.2008
(51) Int. Cl.: B05D 5/06, B05D 3/06, B32B 27/00, B32B 27/36, B60J 1/00

(54) **TRANSPARENT RESIN PLATE AND METHOD FOR PRODUCING THE SAME**
DURCHSICHTIGE HARZPLATTE UND HERSTELLUNGSVERFAHREN DAFÜR
PLAQUE DE RÉSINE TRANSPARENTE ET SON PROCÉDÉ DE FABRICATION

(30) Priority: 04.03.2008 JP 2008053412
(43) Date of publication of application: 29.12.2010
(73) Proprietor: Kabushiki Kaisha Reniasu, Hiroshima 729-0473 (JP)
(72) Inventor: MAEDA, Sadao, Mihara-shi Hiroshima 729-0473 (JP)
(74) Representative: Kramer - Barske - Schmidtchen
(86) International application number: PCT/JP2008/072386
(87) International publication number: WO 2009/110152

(56) References cited:
- JP-A- 9 047 722
- JP-A- 10 249 271
- JP-A- 2002 187 738
- JP-A- 2006 122 748
- JP-A- 2007 031 565
- US-A- 5 614 271
- US-A- 5 770 260

## Description

### FIELD OF THE INVENTION

This invention relates to a transparent resin plate and a method for producing the same, which is usable for transparent materials or lighting materials such as a window, a wall and a roof.

### PRIOR ART

A polycarbonate substrate has been used as a substrate for radioscopy or lighting. Although the polycarbonate substrate is light and superior in formability, its surface is easily damaged as compared with a glass substrate. To improve an abrasion resistance of the surface, a hardened film called a hard coat is formed on the polycarbonate substrate.

A hard-coating layer comprises the hardened film formed by laminating acryl resin or silicon resin on the surface of the polycarbonate substrate.

For methods for enhancing a hard performance (hardness) or an abrasion resistance of the hard-coating layer, many prior arts have been known. For example, patent literature 1 mentions a method for optimizing hardening conditions and compositions of coat liquid, and patent literature 2 mentions a method for dispersing hard particles into a coating film. Besides, patent literature 3 mentions a method for forming a film of silicon dioxide and the like by a dry process such as Chemical Vapor Deposition. Furthermore, patent literature 4 mentions a method for reforming solid compound film having Si-O-Si bonds by vacuum ultraviolet light.

The method of the patent literature 1 is restricted in the view that it is impossible to dry at a hardening temperature of the resin substrate higher than a softening temperature thereof. For example, even in silicon hard coat, it is impossible to obtain compositions and structure of complete silicon dioxide. Accordingly, there is a problem that the hardness deteriorates in case solvent components merely remain in the structure. That is, because the hardening temperature is an important factor to decide the hardness of the film, only the low hardness comes to be obtained in wet coating methods for enhancing the surface hardness of the resin substrate.

On the other hand, the method of the patent literature 2, namely, the method for enhancing the hardness of the whole film by dispersing the hard particles, is available to settle the problem in the patent literature 1. However, another problem is caused by dispersing the particles. For example, light is dispersed on the surfaces of the particles according to a difference between the refraction index of the particles and that of the film materials, so that a haze is enhanced and the transparency comes to be lost.

The method of the patent literature 3 has been proposed to settle all the above-mentioned problems. According to the Chemical Vapor Deposition which is carried out during decompression, a fine coating film having uniform compositions and a uniform thickness can be provided without heating the resin substrate. This method is called a dry coating method for a wet coating method, having the advantage of the formation of a silicon dioxide film including no impurities. In this case, the hardness considerably near to the property of a bulk can be obtained. However, in this method, because the film is formed by a chemical reaction, unnecessary reaction products are generated on electrodes or the device surfaces except the substrate surface. Accordingly, this method has a problem that the device performance and the film property are apt to be unstable. Besides, to avoid this problem, it is necessary to stop the device and clean the inside. Accordingly, an operating time of the device is shortened. Further, in the Chemical Vapor Deposition (CVD), when the film is selectively formed on a required region, a step by a film thickness is formed to the edge. In this case, micro cracks occur for the stress concentration from the edge.

According to the method of the patent literature 4, a solid compound film applicable to a resist for F₂ laser lithography is provided. A fine pattern is formed to a solid compound film including Si-O-Si bonds or a silicon oxide film. According to this method, the solid compound film including Si-O-Si bonds is reformed into silicon dioxide. However, the patent literature 4 does not mention an application to resin glass such as a window or a spectacle lens each having large area at all.
Patent literature 1: Japanese Patent Laid Open Publication No. 2001-232728
Patent literature 2: Japanese Patent Laid Open Publication No. 8-238683
Patent literature 3: Japanese Patent Laid Open Publication No. 2007-156342
Patent literature 4: Japanese Patent No. 3950967
US 5,770,260 relates to a process for forming a silicon dioxide film on a silicon substrate by using a polysilazane compound.
US 5,614,271 relates to a method for the formation of a silica-based coating film on the surface of a silicon or glass substrate by using a polysilazane compound.

### SUMMARY OF THE INVENTION

### PROBLEMS TO BE SOLVED BY THE INVENTION

It is an object of the invention to provide a transparent resin plate superior in a quality and a productivity and a method for producing the same by establishing a method for hardening film in the hard-coating layer formed on the substrate and a method for reforming it.

### MEANS TO SOLVE THE PROBLEM

In the present invention, a transparent resin plate is a plate whose resin substrate is covered with a hard-coating layer. A method for producing the transparent resin plate of the invention is characterized in comprising: a step for forming the hard-coating layer out of silicone polymer by a wet method, and a step for exposing an irradiation of ultraviolet light having a wavelength less than 200 nm on the surface of the hard-coating layer and selectively reforming only the exposed region into a hardened film having a thickness under 0.6 µm. Here the hardened film is thinner than the hard-coating layer.

Further, the transparent resin plate of the invention has the hard-coating layer to cover a polycarbonate substrate. The hard-coating layer comprises silicone polymer, being **characterized in that** a part of the surface comprises a hardened film having a thickness under 0.6 µm mainly composed of silicon dioxide and besides forms a flat surface with its circumferential silicone polymer.

Energy of shorter wavelength light having a wavelength less than 200 nm has force enough to cut bonds of an organic high polymer and destroy a chemical structure. This is called a photo cleavage, being utilized in the invention. That is, by appropriately selecting various conditions such as a laser strength, a pulse duration and a pulse interval and so on, C-H, Si-C and Si-O-Si bonds composing side-chain functional groups of the hard-coating layer are selectively cut in order, and then, the cleaved oxygen atoms and silicon atoms are recombined to reform a part of the hard-coating layer into the hardened film mainly composed of silicon dioxide.

### EFFETS OF THE INVENTION

According to the invention, a part of the hard-coating layer is reformed into the hardened film mainly composed of silicon dioxide such as glass. Accordingly, the transparent resin plate is superior in the abrasion resistance and the durability, besides having a chemically stable surface superior in the transmissivity and the flatness. In this case, because the circumference of the hardened film is guarded by unreformed silicone polymer, the cracks are prevented from occurring from the end portion as much as possible.

### BRIEF DESCRIPTION OF THE DRAWINGS

[Figure 1] This is a schematic view of a section of the transparent resin plate.
[Figure 2] This is a spectral atlas of FT-IR showing relations between wave numbers and the transmittance of the transparent resin plate. F₂ laser light is irradiated on the unreformed siloxane resin layer and the reformed film region which are formed on the polycarbonate substrate respectively. Fig. 2A shows measured effect of the unreformed region, Fig. 2B shows that of the reformed region, and Fig. 2C shows that of thermal silicon dioxide.
[Figure 3] This is a microphotography view of the surface of the transparent resin plate. The Taber Friction Test is carried out to the unreformed siloxane resin layer and the reformed hard-coating layer in accordance with JISK7204. Fig. 3A is a photograph of the unreformed region and Fig. 3B is that of the reformed region.
[Figure 4] This is a comparative-photographic view in the film thickness of the transparent resin plate. Fig. 4A is a microphotography view in the Taber Friction Test of the surface having the film thickness of 0.3 µm, Fig.4B is that having the film thickness of 0.6 µm, and Fig. 4C is that having the film thickness of 1.0 µm, and Fig. 4D is that having the film thickness of 2.0 µm.
[Figure 5] This is a view showing any particular step-like texture between the reformed region and the unreformed region of the transparent resin plate.
[Figure 6] This is a spectral atlas of Examples 3, 4.
[Figure 7] This is a photographic view showing the situation of peeling.
[Figure 8] This is a view showing a characteristic of the transmittance in an ultraviolet line region of a simple substance of hard-coating film.

### EXPLANATION OF REFERENCED NUMERALS

- 1: a substrate
- 2: a primer layer
- 3: a hard-coating layer
- 4: a reformed region
- 100: a transparent resin plate

### PREFERRED EMBODIMENT OF THE INVENTION

A film thickness of a silicon dioxide film is preferably made thick to enhance the abrasion resistance. In the patent literature 4, the past examples merely illustrate that reforming into the silicon dioxide can be carried out. Besides, as to a thickness, they illustrate a possibility for making a reformed region having more than 1 µm.

In advance of the invention, the inventors formed the hard-coating layer on the surface of the resin substrate having an area of about 1 cm², and confirmed that the hard-coating layer was reformed into silicon dioxide by vacuum ultraviolet rays.

To investigate whether cracks occur on the finished silicon dioxide, the resin substrate was dipped into solvent (acetone) which can solve the resin. But, the solution of the resin could not be observed at the portion where the silicon dioxide film was formed. This indicates that no cracks occur on the silicon dioxide film because the solvent penetrated from a crack.

The inventors further formed the hard-coating film and made an area of 1 cm² thereof a reformed region having a thickness of 1 µm or 2 µm. Then a friction test was carried out in accordance with Taber Friction Test. The Taber Friction Test is a test wherein a specimen is fitted and rotated on a rotating disk and worn by loading on a pair of grindstones. For example, according to Japanese Industrial Standards Committee (JISC), JISK7204 is standardized as one of the Taber Friction Test. As a result, when the cracks occurred in the hard-coating film of the unreformed region during the Friction Test, all of them spread to the reformed region and caused new cracks. The load was 500 g, and the number of rotation was 500.

In reforming the Si-O-Si bonds into silicon dioxide (SiO₂) by an exposure light source less than 200 nm, oxygen in a reaction atmosphere or oxygen in silicon polymer is incorporated into the reformed region. It is considered that the volume of the reformed region is changed and an internal stress is kept in the reformed region itself when oxygen is incorporated into the reformed region. Further, it is considered that the internal stress is released and the cracks occurred on the reformed region when the crack occurs on the hard-coating layer in the Taber Friction Test.

Then, samples in which each film thickness of the reformed region of silicon dioxide was under 1 µm were prepared and investigated. As a result, it was found out that the cracks did not occur in the Taber Friction Test when the film thickness was lower than 0.6 µm.

From the above investigation, in reforming into silicon dioxide, the film thickness should be made under 0.6 µm, for example, 0.5 µm. If the reformed region has the film thickness larger than this, the strength can not be enhanced. Adversely, the cracks occur from the inside during use. Accordingly, controlling the film thickness of the reformed region becomes an important problem.

As a light source of vacuum ultraviolet rays having a wavelength shorter than 200nm, there are an excimer laser, an excimer lamp, and a low pressure mercury lamp. The usable excimer lasers are Ar₂ laser having a wavelength of 126 nm, F₂ laser having a wavelength of 157 nm, ArF excimer laser having a wavelength of 193 nm, KrF excimer laser having a wavelength of 248 nm, and/or XeCl excimer laser having a wavelength of 307 nm. In these, the light sources of vacuum ultraviolet rays having a wavelength shorter than 200nm are Ar₂ laser, F₂ laser and ArF laser. Besides, the usable excimer lamps are ones each having a wavelength of 126 nm (Ar2), 146 nm (Kr₂), and 172 nm (Xe₂).

Theoretically, synthetic quartz glass has a light permeability to a wavelength region having vacuum ultraviolet rays of about 145 nm. As to the excimer laser and the excimer lamp each having a wavelength shorter than this, absorption for the silicon dioxide reformed by the vacuum ultraviolet rays occurs. Accordingly, in case of these light sources, because the light does not reach the interior, it is possible to reform an extremely thin region of the exposed surface in the hard-coating layer but it is difficult to control a thickness of the reformed region.

Because oxygen absorbs the vacuum ultraviolet rays, a distance from the light source of the excimer lamp available for a wavelength region of 172 nm to its exposed field is very short, which is less than 3 mm. Therefore, the excimer lamp is available for a plane transparent plate, but unavailable for a three-dimensional transparent plate such as a front glass of a car. An excimer laser easily controllable for the light strength is available for the three-dimensional transparent plate by controlling in accordance with the distance to the transparent plate.

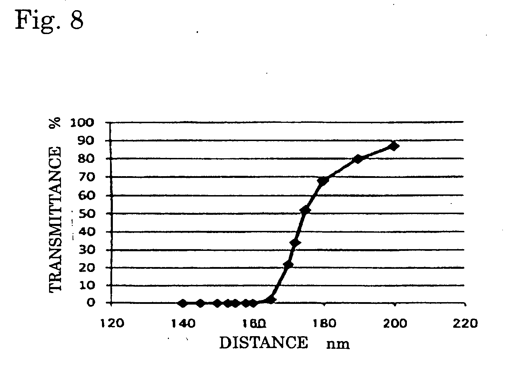

Further, even in the light sources of 145 nm - 200 nm, what caused problems in an adhesive property of the hard-coating layer for the polycarbonate were found out. It was a cause that the vacuum ultraviolet rays permeated the hard-coating layer and invaded the primer layer. According to Fig. 8, the silicon polymer such as siloxane resin has a good transmissivity in a long-wavelength region about 200 nm, but the transmissivity radically decreases in a region from about 180 nm to a short-wavelength. Vacuum ultraviolet rays having a wavelength shorter than 200 nm have an ability to decompose even the polycarbonate substrate used in the invention. Accordingly, it is considered that the primer layer is decomposed so as to peel easily.

According to the above-mentioned investigation, when the excimer laser is used as a light source, it is preferable to use F2 laser having a wavelength of 157 nm. The light of this wavelength does not permeate the siloxane resin. Accordingly, when the excimer laser is irradiated to the siloxane resin, the surface receives high energy and starts to be reformed into the silicon dioxide. The laser light permeated the reformed siloxane resin continues reforming from the surface to the inside in order.

When the excimer lamp is used, it is preferable to use Xe excimer lamp. The Xe excimer lamp has a wavelength of 172 nm, which permeates the hard-coating layer. The permeated light reaches and decomposes the polycarbonate substrate. Besides, the vacuum ultraviolet rays permeate the hard-coating layer with high energy, and therefore, it is difficult to control a thickness of the reformed region. To solve this problem, an ultraviolet absorbent is added to the hard-coating layer. In this case, the ultraviolet absorbent is dispersed in accordance with the film thickness of the hard-coating layer so that the light does not permeate the hard-coating layer. The hard-coating layer including the ultraviolet absorbent absorbs the light energy from the surface side thereof, so that it is reformed. The hard-coating layer changes into silicon dioxide by the reformation. Therefore, the transmissivity increases, so that the light having high energy can penetrate inwardly further. As a result, it is possible to control the film thickness of the reformed region reformed into the silicon dioxide from the surface of the hard-coating layer.

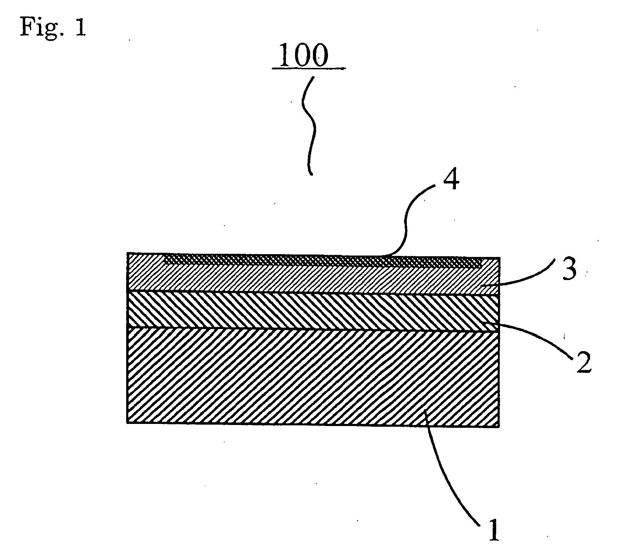

Fig. 1 is a schematic view of a section of the transparent resin plate.

A transparent resin plate 100 comprises a substrate 1, a primer layer 2 and a hard-coating layer 3. The hard-coating layer 3 is formed on the substrate 1 through the primer layer 2. The primer layer 2 and the hard-coating layer 3 are respectively formed by the dip coating method. On the other hand, a part of the surface of the hard-coating layer 3 is formed into a reformed region (a hardened film) 4.

The construction of the transparent resin plate 100 will be explained below.

The substrate 1 is specifically not limited. However, for the materials, it is preferable to use various olefin resins or transparent resins such as acryl resin, polycarbonate resin, polyarylate resin, polystyrene resin, polyethylene terephthalate resin, styrene polymer and so on.

The primer layer 2 is provided in order to enhance the shock resistance or the adherence between the substrate 1 and the hard-coating layer 3. Besides, in the invention, it has an effect to extinguish flaws on the surface of the substrate 1. The primer layer 2 is formed out of various resins such as polyester resin, acryl resin, polyurethane resin, epoxy resin, melamine resin, polyolefin resin, urethane acrylate resin and so on.

The hard-coating layer 3 is formed out of silicone polymer, namely, siloxane resin. Generally, this siloxane resin is obtained by hydrolyzing siloxane sol, and this siloxane sol is obtained by an arcoxysilane-based condensing reaction.

The reformed region 4 is formed by reforming a part of the surface of the hard-coating layer by the laser light irradiation, comprising a thin film mainly composed of silicon dioxide.

Next, a method for producing the transparent resin plate related to the invention will be explained. The primer layer 2 having a predetermined thickness is formed on the resin substrate 1 by the wet method, for example, the dip coating method. The substrate 1 is dried at a room temperature for a required time. Thereafter, it is harden-dried in the atmosphere for a required time by heating. After the temperature of the substrate 1 returns to the room temperature, the hard-coating layer 3 having the fixed thickness is similarly formed on the primer layer 2 by the wet method, namely, the dip coating method. After the hard-coating layer 3 is dried at the room temperature for a required time, it is harden-dried in the atmosphere for a required time by heating. The harden-drying temperature and the necessary time can be appropriately converted for a kind of materials and the film thicknesses.

Then, the surface of the hard-coating layer 3 is exposed to an irradiation of the ultraviolet laser light having a wavelength less than 200 nm so as not to cause an ablation. Here, the components of the exposed region are reformed to form the reformed region.

### Example

To further illustrate the transparent resin plate and the method for producing the same of the invention, the following examples are given. However, these examples are intended to illustrate the invention and not to be construed to limit the scope of the invention.

### (Example 1)

This embodiment is an example wherein the polycarbonate substrate, the acrylic primer layer and the silicone hard-coating layer were applied as materials of the transparent resin plate 100. The transparent resin plate 100 was produced as follows. Thereafter, the reformed region 4 of the hard-coating layer 3 was compared with the circumferential unreformed region in the property.

An acryl resin layer 2 having a film thickness of about 4 µm was formed on a polycarbonate substrate 1 by the dip coating method. Then the plate was dried at the room temperature, and thereafter, hardened by heating in the atmosphere at a temperature of 120 °C for 70 minutes. After the substrate 1 returned to the room temperature, the hard-coating layer 3 having a film thickness of about 4 µm was formed on the acryl resin layer 2 by the dip coating method. The hard-coating layer 3 was formed out of siloxane resin. Then, the plate was dried at the room temperature, and thereafter, harden-dried in the atmosphere at a temperature of 120 °C for 60 minutes.

Next, F₂ laser having a wavelength of 157 nm was irradiated on the surface of the hard-coating layer 3. An irradiated area was about 10 mm × 25 mm, the energy density was about 17 mJ/cm², pulse frequency was 10 Hz, and irradiation time was 30 seconds. The reformed region 4 having a thickness of about 0.15 µm was obtained. Any particular step-like texture can not be observed at the boundary between the reformed region 4 and the unreformed region.

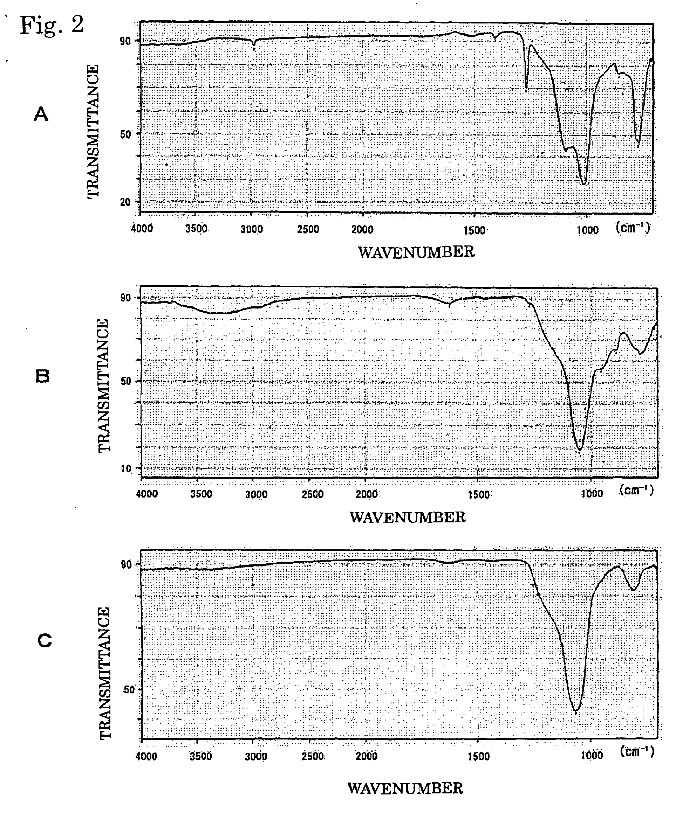

Fig. 2 is a spectral atlas of FT-IR (Fourier Transform Infrared Spectrometer) showing relations between wave numbers and the transmissivity. Fig. 2A shows a measurement result of the unreformed region (the hard-coating layer 3), Fig. 2B is the reformed region 4 (the hardened film), and Fig. 2C is thermal silicon oxide. In Fig. 2A, other than stretching vibration (1200 - 1000 cm⁻¹) of Si-O, deformation vibration (1270 cm⁻¹) of Si-CH₃, and C-H stretching vibration and Si-C stretching vibration of (765 cm⁻¹) which are originated in CH₃ (2791 cm⁻¹) are observed. Contrarily, in Fig. 2B, absorption of 2971 cm⁻¹, 1270 cm⁻¹ or 765 cm⁻¹ is weak and an absorption spectrum like the spectral atlas of Fig. 2C is shown. Accordingly, the reformed region 4 is considered as having a structure closely related to the characteristic of the thermal silicon dioxide mainly composed of silicon dioxide.

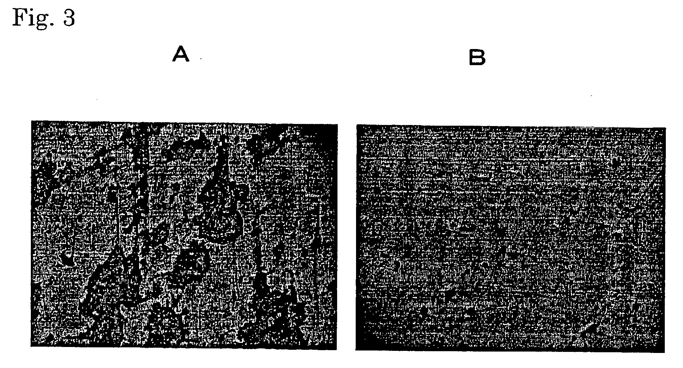

Fig. 3 is a microphotography view of the surface of the hard-coating layer 3, showing a test result by the Taber Friction Test in accordance with JISK7204. Fig. 3A is a microphotography of the unreformed region and Fig. 3B is a microphotography of the reformed region. In the reformed region and the unreformed siloxane resin layer surface (the hard-coating layer surface), a big different is observed in flaws by the Friction Test. It is confirmed that the hardness of the reformed region increases.

Although the above-mentioned example explained a method when the irradiation area was about 10 mm × 25 mm, the irradiation area can be enlarged by irradiating the laser while moving an XY-table on which the substrate 1 is arranged. Besides, in the above-mentioned example, the laser reformation required the irradiation time of 30 seconds at the pulse frequency of 10 Hz per one area. However, the irradiation time can be shortened; for example, it is 3 seconds when the pulse frequency is 100 Hz. When the pulse frequency is 1KHz, the irradiation time can be shortened in 0.3 seconds.

Reforming time can be shortened by letting the laser output increase in the range where abrasion does not occur.

The vacuum ultraviolet laser (F₂) having a wavelength of 157 nm used in the above-mentioned example has an oxygen absorptivity. However, it is possible to suppress the decrement of the laser light, for example, by filling an optical path with nitrogen gas. In this case, vacuuming time is needless because the operation is not carried out under vacuum like the CVD.

In this embodiment, conditions for harden-drying the siloxane resin layer can be appropriately changed in order to lighten stress or optimize composition and structure of the reformed region. For example, the harden-drying temperature can be lowered. Besides, the harden-drying may be carried out under appropriate conditions after the reformation not in forming the siloxane resin layer.

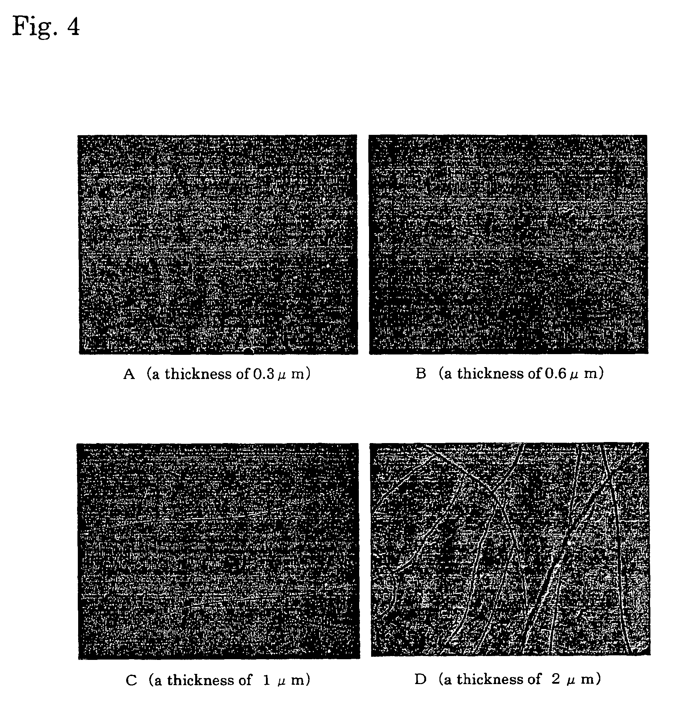

Fig. 4 is a comparison view showing the relation of a thickness of the reformed region 4 and a crack, each figure being a microphotography view of a test result by the Taber Friction Test. The transparent resin plates each having the reformed region 4 of the film thickness of 0.6 µm, 1.0 µm or 2.0 µm were formed the same as example 1 except the thickness of the reformed region 4 was 0.3 µm. A thickness of the acryl resin layer and a thickness of the silicone polymer layer are both made 4 µm. The test result is according to the Taber Friction Test in accordance with JISK7204. From the figure, it is confirmed that a crack does not occur when the thickness of the reformed region is 0.3 µm and that a crack occurs when a thickness is more than 0.6 µm. Besides, the more a film thickness is larger, the more the density of the cracks increases. It is surmised that the cracks occurs because the reforming region 4 has compressive stress by expanding the volume because oxygen incorporated by the laser reformation forms silicon dioxide. In case the thickness of the reformed region is more than 0.6 µm, the cracks occur irrespective of the size of the transparent glass substrate. The film thickness is controlled less than 0.6 µm by appropriately choosing formation conditions of the hard-coating layer 3, the laser light strength, the irradiation time, the pulse duration and the frequency so as not to cause the cracks.

### (Example 2)

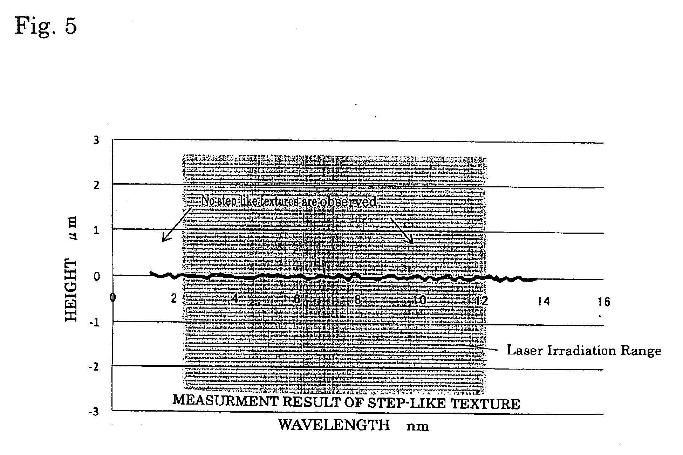

The transparent resin plate was formed the same as example 1 except irradiating the laser on an area where a wiper blade rubbed. The polycarbonate substrate 1 with the hard-coating layer 3 was arranged on the XY table and exposed to the irradiation of the laser as moving the XY table. In this case, the motion of the XY table was inputted into a controller in advance, and only a reforming area was deposited as scanning. Since the laser light was equally irradiated on the deposited area, there were no step-like texture observed between the reformed region and the unreformed region. Accordingly, the abrasion resistance for the wiper blade was enhanced (See Fig. 5). Besides, because the internal stress of the reformed region is lightened by controlling the film thickness, even if the cracks occur on the unreformed region, another crack caused by them can be prevented from transmitting from the edge of the reformed region.

### (Example 3)

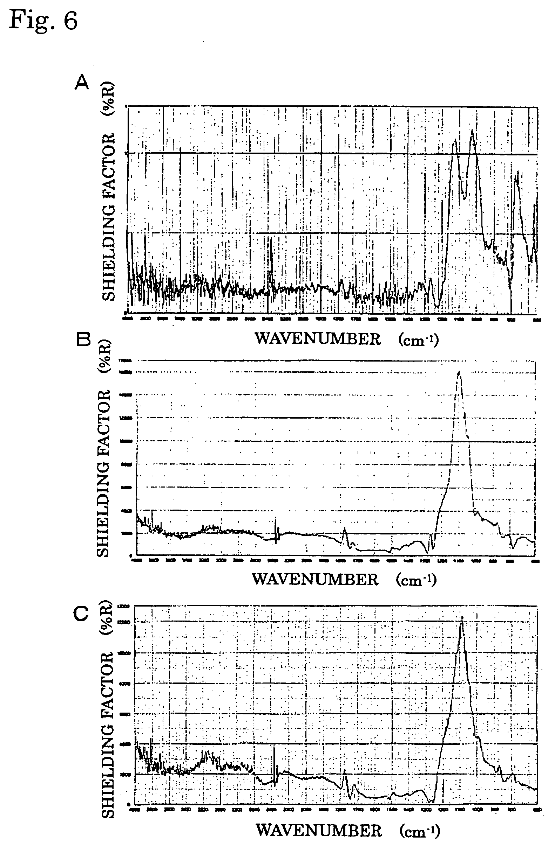

The reformation was carried out in N₂ atmosphere for 180 minutes at Kr₂ excimer lamp output energy strength of 3.2 mW/cm². The thermosetting primer and the thermosetting hard-coating layer were formed the same as the above-mentioned steps. The reformation into silicon dioxide was confirmed by the surface analysis based on the spectral atlas of FT-IR. A vertical line of the spectral atlas of FT-IR in the above-mentioned examples shows the transmissivity, whereas it shows a shielding rate in this example. Fig. 6A illustrates an observation result before reforming (after forming the hard-coating layer), and Fig. 6B illustrates an observation result after irradiating the excimer lamp of 146 nm. As shown in Fig. 6B, a forked Si-O peak is changed into a single peak and a C-H peak is decreased or disappeared. In this case, the thickness of the reformed region was about 1 µm. In this example, although the film thickness was thickened in order to confirm the reformation into silicon dioxide, the cracks occurred according to the Taber Friction Test in accordance with JISK7204.

In case the film thickness of the reformed region is made under 0.5 µm with Kr₂ excimer lamp, about half irradiation may as well be carried out but it takes much time to form the reformed region.

To reform into the silicon dioxide, according to the gas absorption of the resin, oxygen absorbed from the atmosphere is utilized.

### (Example 4)

The reformation was carried out with Xe₂ excimer lamp having a wavelength of 172 nm instead of the Kr₂ excimer lamp in Example 3. (For oxygen for reforming into silicon dioxide, oxygen absorbed in the resin was utilized.) After forming the thermosetting primer and the thermosetting hard-coating layer, the resin plate was disposed in N₂ atmosphere for 15 minutes at a luminous intensity of 35 mW/cm². Fig. 6C illustrates the observation result by FT-IR. According to this result, it is confirmed that the reformation into SiO₂ was carried out the same as the case of the irradiation of 146 nm. The thickness of the reformed region was also about 1 µm. Similarly with Example 3, according to the Taber Friction Test in accordance with JISK7204, the cracks occurred.

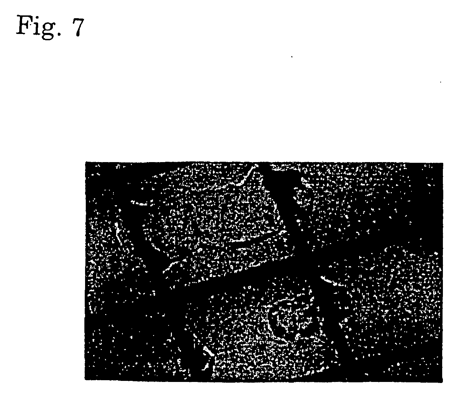

Besides, an adherence test was carried out to the reformed region in Example 4 in accordance with JISK5400 (JISC standard, a crosscut tape peeling test). Peeling of the hard-coating layer was confirmed. Fig. 7 illustrates the peeling situation. (The black lines are flaws of the crosscut.) The tape peeling test is a test wherein 100 squares of 10 mm × 10 mm are made and pressed with a cellophane tape and thereafter the number of eyes which stay when the cellophane tape is suddenly torn off is counted.

Although the irradiation time was shortened for around 1 minute and the film thickness of the reformed region was thinned in 0.7 µm, the differences were not confirmed in the peeling situation by the test in accordance with JISK5400. It is inferred that the peeling is not caused by reforming the hard-coating film. The hard-coating film of 4 µm was formed on a synthetic quartz glass, and then, the transmissivity of its simple substance in an ultraviolet ray region was measured. The characteristics were shown in Fig. 8, and it was confirmed that the light of 172 nm permeated around 30 %. However, in this case, the cracks were not confirmed to occur in the Taber Friction Test in accordance with JISK7204.

Thus it is considered that the vacuum ultraviolet rays decompose the bedding primer resin layer (acryl resin) and deteriorate the adhesion property in a boundary of the hard-coating layer and the primer layer.

Next, an appropriate amount of the ultraviolet absorbent was added to hard-coating liquid in advance, and filming of the hard-coating layer to prevent the reforming ultraviolet rays from permeating was carried out. Then, the reformation was carried out under the same condition (in N₂ atmosphere for 15 minutes at a luminous intensity of 35 mW/cm²) instead of the Xe₂ excimer lamp. As a result, peeling of the hard-coating layer was not confirmed in the adherence test in accordance with JISK5400. For an ultraviolet absorbent adaptable to the above-mentioned purpose, metal oxide such as ZnO, TiO, CaO or SnO is used and desirably doped if necessary. For example, triazine compounds of an organic ultraviolet absorbent can be used. The metal oxides such as ZnO, TiO, CaO and SnO absorb the vacuum ultraviolet rays to be separated into metal and oxygen, and lose an ultraviolet absorbing ability. Accordingly, the vacuum ultraviolet rays arrive from the surface of the hard-coating layer to the inside with high energy sequentially, then being used for the reformation. In this case, it is considered that some separated oxygen is incorporated as silicon dioxide.

The compound of the hard-coating liquid may be changed for one superior in shielding property of the wavelength in itself. In this case, a light absorption end of the hard-coating liquid is controlled so as to be higher than the wavelength of the used light source.

Although the excimer laser and the excimer lamp were used in the above-mentioned examples, a low pressure mercury lamp can be also used in the invention as a light source for irradiating vacuum ultraviolet rays. For example, the low pressure mercury lamp of 184.9 nm is usable. When using this lamp, like the excimer lamp of 172 nm, the ultraviolet absorbent is added to the hard-coating layer.

Although the hard-coating layer 3 was formed on the substrate 1 through the primer layer 2 in the above-mentioned examples, it can be directly formed on the substrate 1 out of siloxane resin by the dip coating method so as to cover the substrate 1. In this case also, when utilizing the vacuum ultraviolet rays having a wavelength permeating the hard-coating layer 3, it is desirable to dope the hard-coating layer 3 with the metal oxide such as ZnO, TiO, CaO or SnO. The vacuum ultraviolet rays decompose the resin components of the substrate 1, thereby making worse the adhesion property in the boundary of the substrate 1 and the hard-coating layer 3.

## Claims

1. A method for producing a transparent resin plate (100) in which a resin substrate (1) is covered with a hard-coating layer (3), comprising:
a step for forming said hard-coating layer (3) out of silicone polymer by a wet method;
a step for irradiating vacuum ultraviolet rays on a surface of a silicone polymer layer by an ultraviolet light source having a wavelength less than 200 nm, besides reforming only a region exposed to the irradiation into a hardened film mainly composed of silicon dioxide having a thickness under 0.6 µm thinner than the silicone polymer layer.

2. The method for producing a transparent resin plate (100) of claim 1, wherein said substrate (1) is a transparent resin substrate.

3. The method for producing a transparent resin plate (100) of claim 1, wherein a primer layer (2) is formed on said resin substrate (1) by the wet method and thereon the hard-coating layer (3) is formed.

4. The method for producing a transparent resin plate (100) of claim 1, wherein said silicone polymer comprises siloxane resin.

5. The method for producing a transparent resin plate (100) of claim 1, wherein an excimer laser is used as the light source.

6. The method for producing a transparent resin plate (100) of claim 1, wherein an excimer lamp is used as the light source.

7. The method for producing a transparent resin plate (100) of claim 6, wherein an ultraviolet absorbent is added to the silicone polymer.

8. A transparent resin plate (100) comprising:
a hard-coating layer (3) for covering a transparent resin substrate (100), wherein the hard-coating layer (3) comprises silicone polymer, and a part of a surface of the hard-coating layer (3) compounds a hardened film having a film thickness under 0.6 µm mainly composed of silicon dioxide and besides forms a flat surface with its circumferential silicone polymer.

## Patentansprüche

1. Verfahren zur Herstellung einer transparenten Harzplatte (100), bei der ein Harzsubstrat (1) mit einer Hartbeschichtungsschicht (3) bedeckt ist, umfassend:
einen Schritt des Bildens der Hartbeschichtungsschicht (3) aus einem Silikonpolymer durch ein Nassverfahren,
einen Schritt des Einstrahlens von Vakuumultraviolettstrahlen auf eine Oberfläche einer Silikonpolymerschicht durch eine Ultraviolettlichtquelle mit einer Wellenlänge von weniger als 200 nm, wobei nur ein Bereich, welcher der Einstrahlung ausgesetzt ist, in einen gehärteten Film umgewandelt wird, der vorwiegend aus Siliziumdioxid zusammengesetzt ist und eine Dicke von weniger als 0,6 µm aufweist, was dünner ist als die Silikonpolymerschicht.

2. Verfahren zur Herstellung einer transparenten Harzplatte (100) nach Anspruch 1, bei dem das Substrat (1) ein transparentes Harzsubstrat ist.

3. Verfahren zur Herstellung einer transparenten Harzplatte (100) nach Anspruch 1, bei dem eine Haftvermittlerschicht (2) auf dem Harzsubstrat (1) durch das Nassverfahren gebildet wird und darauf die Hartbeschichtungsschicht (3) gebildet wird.

4. Verfahren zur Herstellung einer transparenten Harzplatte (100) nach Anspruch 1, bei dem das Silikonpolymer ein Siloxanharz umfasst.

5. Verfahren zur Herstellung einer transparenten Harzplatte (100) nach Anspruch 1, bei dem ein Excimerlaser als Lichtquelle verwendet wird.

6. Verfahren zur Herstellung einer transparenten Harzplatte (100) nach Anspruch 1, bei dem eine Excimerlampe als Lichtquelle verwendet wird.

7. Verfahren zur Herstellung einer transparenten Harzplatte (100) nach Anspruch 6, bei welchem dem Silikonpolymer ein Ultraviolett-Absorptionsmittel zugesetzt wird.

8. Transparente Harzplatte (100), mit:
einer Hartbeschichtungsschicht (3) zum Bedecken eines transparenten Harzsubstrats (100), wobei die Hartbeschichtungsschicht (3) ein Silikonpolymer umfasst, und ein Teil einer Oberfläche der Hartbeschichtungsschicht (3) einen gehärteten Film bildet, der eine Dicke von weniger als 0,6 µm aufweist und vorwiegend aus Siliziumdioxid zusammengesetzt ist und ferner mit dem ihn umgebenden Silikonpolymer eine flache Oberfläche bildet.

## Revendications

1. Méthode pour produire une plaque (100) transparente en résine dans laquelle un substrat de résine (1) est couvert avec une couche de revêtement dur (3), comprenant
une étape pour former ladite couche de revêtement dur (3) au départ d'un polymère de silicone par un procédé par voie humide ;
une étape pour irradier sous vide par des rayons ultraviolets sur une surface d'une couche d'un polymère de silicone par une source de lumière d'ultraviolets présentant une longueur d'onde inférieure à 200 nm, reformant seulement une zone exposée à l'irradiation en un film durci composé majoritairement de dioxyde de silicium présentant une épaisseur de moins de 0,6 µm plus mince que la couche d'un polymère de silicone.

2. Méthode pour produire une plaque (100) transparente en résine selon la revendication 1, dans laquelle ledit substrat (1) est un substrat transparent en résine.

3. Méthode pour produire une plaque (100) transparente en résine selon la revendication 1, dans laquelle une couche d'apprêt (2) est formée sur ledit substrat de résine (1) par le procédé par voie humide et par-dessus est formée la couche de revêtement dur (3).

4. Méthode pour produire une plaque (100) transparente en résine selon la revendication 1, dans laquelle ledit polymère de silicone comprend une résine siloxane.

5. Méthode pour produire une plaque (100) transparente en résine selon la revendication 1, dans laquelle un laser à eximère est utilisé comme source de lumière.

6. Méthode pour produire une plaque (100) transparente en résine selon la revendication 1, dans laquelle une lampe à eximère est utilisé comme source de lumière.

7. Méthode pour produire une plaque (100) transparente en résine selon la revendication 6, dans laquelle un absorbant d'ultraviolets est ajouté au polymère de silicone.

8. Plaque (100) transparente en résine comprenant :
une couche de revêtement dur (3) pour couvrir un substrat transparent (100) en résine, où la couche de revêtement dur (3) comprend un polymère de silicone, et une partie d'une surface de la couche de revêtement dur (3) compose un film durci présentant une épaisseur de film de moins de 0,6 µm composée majoritairement de dioxyde de silicium et forme en outre une surface plane avec son polymère de silicone circonférentiel.
